# NEW EUROPEAN PATENT SPECIFICATION

(11) **EP 1 202 301 B2**
(45) Date of publication and mention of the opposition decision: **12.10.2011**
(45) Mention of the grant of the patent: 01.08.2007
(21) Application number: 00935623.9
(22) Date of filing: 09.06.2000
(51) Int. Cl.: H01G 9/04, H01G 9/07, C25D 11/26, H01G 9/052

(54) **ELECTRODE MATERIAL FOR CAPACITOR AND CAPACITOR USING THE SAME**
ELEKTRODENMATERIAL FÜR EINEN KONDENSATOR UND KONDENSATORELEKTRODE
MATERIAU D'ELECTRODE POUR CONDENSATEUR ET CONDENSATEUR L'UTILISANT

(30) Priority: 09.06.1999 JP 16208299
(43) Date of publication of application: 02.05.2002
(73) Proprietor: SHOWA DENKO K.K., Tokyo 105-8518 (JP)
(72) Inventor: Nagato, Nobuyuki, Showa Denko Kabushiki Kaisha, Midori-ku, Chiba-shi, Chiba 267-0056 (JP); Naito, Kazumi, Showa Denko Kabushiki Kaisha, Midori-ku, Chiba-shi, Chiba 267-0056 (JP)
(74) Representative: Strehl Schübel-Hopf & Partner
(86) International application number: PCT/JP2000/003771
(87) International publication number: WO 2000/075943

(56) References cited:
- JP-A- 6 306 678
- JP-A- 9 017 684
- JP-A- 9 306 789
- JP-A- 62 230 997
- JP-A- 63 034 917
- JP-A- 2000 068 160
- US-A- 5 419 824
- US-A- 5 790 368
- PATENT ABSTRACTS OF JAPAN vol. 1995, no. 02, 31 March 1995 (1995-03-31) -& JP 06 306678 A (NIPPON STEEL CORP), 1 November 1994 (1994-11-01)

## Description

### FIELD OF THE INVENTION

The present invention relates to a process for making an electrode material for a capacitor having a large capacitance per unit weight and good leak current characteristics, and a capacitor using the electrode material.

### BACKGROUND OF THE INVENTION

Capacitors used for electronic instruments such as portable telephone and personal computer are demanded to have a small size and a large capacitance.

Among these capacitors, a tantalum capacitor is preferred because it has a large capacitance for the size and exhibits good performance. In this tantalum capacitor, a sintered body of powdered tantalum is generally used for the anode moiety. Also, a sintered body made of niobium is being studied as a material having a larger dielectric constant than that of tantalum. On such a sintered body, an oxide layer to work as a dielectric material is formed by an electrolytic oxidation procedure commonly employed in the process for manufacturing a capacitor.

On the other hand, in JP-A S63-34917 (the term "JP-A" as used herein means an "unexamined published Japanese patent application") describes a method for manufacturing a capacitor having a large capacitance, wherein a metal foil or rod having pores or empty spaces therein is reacted in an alkaline solution to form a perovskite oxide layer directly on the metal electrode material, and further describes a capacitor having the oxide layer as a dielectric material.

These capacitors manufactured from a sintered body of niobium or tantalum as an electrode material and having a dielectric layer comprised of niobium oxide or tantalum oxide, formed on the surface thereof, or capacitors having a dielectric material consisting of a perovskite acid compound directly formed on the surface thereof have the following problems and cannot satisfactorily respond to the requirement for a larger capacitance.

In the case where a dielectric material oxide film of a capacitor is formed by an electrolytic oxidation procedure commonly employed in conventional techniques, an oxide film for the dielectric material must be formed as an "ultra"-thin film so as to obtain a larger capacitance. However, When an "ultra"-thin film is formed, a leakage current is generated as a serious problem in thinner film parts, therefore, the "ultra"-thin film cannot be used practically and in turn a larger capacitance cannot be obtained.

The conventional direct reaction method of forming an acid compound film as a dielectric material having a larger dielectric constant cannot produce an acid compound of tantalum or niobium.

Furthermore, when an acid compound film is directly formed by using other metals as an electrode material according to the direct reaction method as described in JP-A S63-334917, the dielectric film formed is uneven in thickness and the thin parts gives rise to occurrence of leakage current, therefore, the thickness of thin parts must be increased as large as to reduce the leakage current to an acceptable level or lower. As a result, the average thickness of the film layer as a whole increases and a larger capacitance cannot be obtained.

In addition, as a problem in the production, when this reaction method is involved in the production process, the raw material solution for the reaction is entirely reacted, therefore, the production process must be carried out in a batchwise manner while the raw material solution is exchanged in each operation, and thus the productivity decreases.

### DISCLOSURE OF THE INVENTION

In view of the foregoing, an object of the present invention is to provide a capacitor having a large capacitance per unit weight while good leak current characteristics are deteriorated only to a minor extent.

The present invention has been made to achieve the above-mentioned object, and succeeded in development of a process for making an electrode material for a capacitor of a larger capacitance per unit weight without reduction of the whole thickness of a dielectric layer. Thus the present invention has been completed.

The present invention provides a process for making an electrode material for a capacitor, which material comprises at least one metal selected from tantalum metal, niobium metal, tantalum-niobium composite metal or a tantalum and/or niobium alloy with a ratio of tantalum or niobium in the range of 15 mol% to 98 mol%, which has a dielectric layer formed on the surface thereof; wherein said process comprises reacting an oxide layer of said metal formed on the surface of said metal with an alkaline solution to convert at least a part of the metal oxide layer of said metal into at least one metalate compound selected from a tantalate compound, a niobate compound and a composite material of tantalate compound with niobate compound.

The above-mentioned metal having a metal oxide layer formed on the surface thereof is preferably formed by the electrolytic oxidation using as anode at least one metal selected from tantalum metal, niobium metal and tantalum-niobium composite metal.

### BEST MODE FOR CARRYING OUT THE INVENTION

In the present invention, the surface layer of the electrode material for a capacitor is obtained by reacting an oxide of at least one metal selected from tantalum metal, niobium metal and tantalum-niobium composite metal, with an alkaline solution to convert at least a part of the metal oxide into at least one metalate compound selected from a tantalate compound, a niobate compound and a composite material of tantalate compound with niobate compound.

In the present invention, it is essential that at least a part of the metal oxide constituting the surface layer is converted by the reaction with an alkaline solution into a metalate compound selected from selected from a tantalate compound, a niobate compound and a composite material of tantalate compound with niobate compound. That is, the dielectric layer may be substantially (i) wholly comprised of at least one metalate compound selected from a tantalate compound, a niobate compound and a tantalate compound-niobio acid compound composite, or, (ii) comprised of a combination of an oxide of at least one metal selected from tantalum metal, niobium metal and tantalum-niobium composite metal with at least one metalate compound selected from a tantalate compound, a niobate compound and a tantalate compound-niobate compound composite.

By the term "tantalum metal" and "niobium metal" as used herein, we mean not only a simple metal of tantalum and a simple metal or niobium, but also alloys of these metals. By the term "tantalum-niobium composite metal" as used herein we mean a combination of tantalum with niobium wherein the two metals are brought into a state of unity in any fashion, which covers a broad range spanning from a solid solution or an intermetallic compound to a mixture. An alloy is a representative example of the composite metal. The alloy Includes an alloy consisting of tantalum and niobium, an alloy consisting of tantalum and/or niobium, and at least one element selected from the group consisting of Group 3A elements, Group 4A elements, Group 3B elements, Group 4B elements and Group 5B elements in the Periodic Table.

As examples of the oxide of at least one metal selected from tantalum metal, niobium metal and tantalum-niobium composite metal, there can be mentioned Ta₂O₅, Ta₂Oₙ (n is a positive number of less than 5), Nb₂O₅, Nb₂Oₘ (m is a positive number of less than 5), and oxides of a tantalum/niobium composite having a structure corresponding to these formulae.

By the phase "at least one metalate compound selected from a tantalate compound a niobate compound and a composite material of tantalate compound with niobate compound, which constitutes a surface layer of the electrode material for a capacitor", we mean compounds of tantalate, niobate and/or a tantalate niobate composite with alkali metal, alkaline earth metal or a Group 3A element such as lanthanide series element, or, when an alloy of tantalum and/or niobium is used, we mean compounds of tantalate, niobate and/or a tantalate niobate composite with tantalate and/or niobate and at least one element selected from Group 3A elements, Group 4A elements, Group 3B elements, Group 4B elements and Group 5B elements in the Periodic Table. The tantalum and niobium in the tantalate and/or niobate may have a valence of 4 or 5, or those having respective valences may be present in combination.

Examples of the tantalate compound and niobate compound include a perovskite compound. The perovskite compound has a high dielectric constant and exhibits excellent stability and other properties desires for a dielectric material, therefore, when a capacitor is manufactured using this material, the capacitor obtained can have a large capacitance per unit weight, good dielectric strength and in turn good leakage current characteristics. Also, the dielectric constant of the dielectric material can be elevated by sintering a molding of these compounds to enhance crystallinity. In the case when the dielectric material used is in the amorphous state or in the lowly crystalline state, the capacitor manufactured using it exhibits good leakage current characteristics.

In the present invention, when the dielectric material is comprised of an oxide of at least one metal selected from tantalum metal, niobium metal and tantalum-niobium composite metal, and at least one metalate compound selected from a tantalate compound, a niobate compound and a composite of a tantalate compound with a niobate, compound, the metal oxide and the metalate compound together form a two-layer structure. That is, the dielectric material has a two-layer structure comprising a metal oxide layer and a metalate compound layer formed on the metal oxide layer. This two-layer structure of the dielectric material can be regarded as being in the state such that two kinds of dielectric materials are arranged in series. In this structure, the dielectric constant of a dielectric material having a small dielectric constant, i.e., an oxide of at least one metal selected from tantalum metal, niobium metal and tantalum-niobium composite metal, is deemed to determine the total dielectric constant. The thickness of this dielectric material having the two-layer structure can be reduced as compared with that of the conventional dielectric material having a one layer structure comprising a metal oxide alone. Therefore a capacitor having the dielectric material with a structure obtained by the process of the present invention can have a larger capacitance per unit weight than that of the conventional capacitor having a dielectric material with a one layer structure. On the other hand, the dielectric material with the two-layer structure has a thickness equal to the total thickness of the two-layer structure, therefore, worsening of current leakage characteristics can be minimized.

Further, when the dielectric material is comprised of at least one metalate compound selected from a tantalate compound, a niobate compound and a composite of a tantalate compound with a niobate compound, the metalate compound can have a dielectric constant by far larger than that of an oxide of tantalum metal, niobium metal and/or tantalum-niobium composite metal, therefore, by using the electrode material comprising the metal acid compound, a capacitor having a large capacitance can be obtained.

Furthermore, in the present invention, the oxide film having a uniform layer thickness formed by electrolysis is displaced by an metalate compound film by an alkali treatment, therefore, a uniform and thin metalate compound film can be obtained and in turn the capacitance of a capacitor can be increased without causing any worsening of the leakage current characteristics.

One practical embodiment for producing the electrode material for a capacitor using a process of the present invention will now be described below.

The tantalum metal and/or niobium metal, or the alloy of tantalum metal and/or niobium metal, which are used in the present invention, can have any shape of foil, sheet or rod. A sintered body of a molding of a powder of tantalum and/or niobium or an alloy thereof may also be used. In the case of foil, sheet or rod, for the purpose of increasing the surface area, an etching treatment may be performed in the depth spanning from the outer surface to the center or to a predetermined position in the inside by a conventional method such as electrolysis etching.

The above-described sintered body can be made, for example, by first preparing a powder (average particle diameter: about 0.5 to 10 µm) from tantalum metal and/or niobium metal, or an alloy thereof, and then making the sintered body from the powder. In order to obtain this powder, hydrogen may be introduced into the metal or alloy to pulverize it by making use of the hydrogen brittleness. The pulverization may be performed by a conventional method such as a method using a ball mill or a jet mill. The pulverization may also be carried out in a wet system using a solvent such as water or an alcohol. The pulverization may also be performed in an atmosphere of an inert gas such as argon or nitrogen.

In the method for producing a sintered body from the powder, the powder is press-molded into a prescribed shape, and then, heated under a pressure of about 1 to 10⁻⁶ Torr for a period of several minutes to several hours at a temperature determined taking account of the particle size of powder or the melting point of the alloy, for example, at a temperature from 400 to 2,000°C, preferably from the standpoint of reducing the heating cost or maintaining the strength of the sintered body to a certain degree, from 500 to 1,500°C.

The metal or alloy may be partially nitrided, for example, by a method of heating it in nitrogen at the stage of a prescribed form, at the stage of powder, at the stage after the molding or at the stage after the sintering.

For the nitriding treatment, for example, a method disclosed by the present inventors in JP-A H10-242004 may be used. By partially nitriding the metal or alloy, the capacitor manufactured using the material can have far improved leakage current characteristics.

The alloy used in one practical embodiment of the present invention is preferably an alloy consisting of tantalum and/or niobium and at least one element selected from Group 3A elements (Sc, Y, lanthanide, actinide), Group 4A elements (Ti, Zr, Hf), Group 3B elements (B, Al, Ga, In, Tl), Group 4B elements (C, Si, Ge, Sn, Pb) and Group 5B elements (N, P, As, Sb, Bi) in the Periodic Table. The ratio of tantalum or niobium in the alloy is in the range from 15 mol% to 98 mol%, preferably from the standpoint of obtaining a larger capacitance, from 50 mol% to 93 mol%. If the ratio is less than 15 mol%, when a capacitor is manufactured using the alloy, the capacitor cannot have a large capacitance per unit weight as expected, whereas if it exceeds 98 mol%, segregation of slight metals easily occurs to make it difficult to obtain an alloy. The alloy can be made by a conventional method such as an arc dissolution method.

The oxide of tantalum metal and/or niobium metal or an alloy thereof can be prepared, for example, in an oxidizing atmosphere or by the electrolytic oxidation in an electrolytic solution. For forming the oxide in an oxidizing atmosphere, for example, a method of oxidation in an oxidizing air such as air or oxygen gas, or a method of oxidation with an oxidizing agent can be employed. The oxidizing agent includes inorganic oxidizing agents and organic oxidizing agents, and, as specific examples thereof, there can be mentioned hydrogen peroxide; persulfates such as ammonium persulfate, potassium persulfate and sodium persulfate; perphosphates such as ammonium perphosphate and potassium perphosphate; and peracetic acid, and hydroxy peroxide. For forming an oxide using such an oxidizing agent, a method of dipping the metal or alloy in a solution of the oxidizing agent dissolved in water or a polar organic solvent such as alcohol or dimethylformamide, can be employed.

For forming the oxide in an oxidizing atmosphere, a method of oxidation in air, a method of oxidation with oxygen gas, and a method of oxidation with an oxidizing agent may be employed. These methods may be used in combination. Also, two or more oxidizing agents may be used in combination.

For forming the oxide by the electrolytic oxidation in an electrolytic solution, an electric current is passed between the metal or an alloy thereof acting the part of anode and an appropriate cathode which is corrosion-resistant against the electric solution and has high conductivity, through an electrolytic solution by a constant voltage method, a constant current method, a pulse method or a combination of these methods, thereby forming the oxide. The electrolytic solution may be a conventional electrolytic solution, for example, a solution in which an inorganic acid such as sulfuric acid, hydrochloric acid or phosphoric acid, or an organic acid such as benzoic acid or adipic acid, is dissolved.

The oxide may also be made using a combination of the method of forming an oxide in an oxidizing atmosphere with the method of forming an oxide by the electrolytic oxidation in combination. A method of performing first oxidation in an oxidizing atmosphere and then performing electric oxidation is especially preferable.

By the above-mentioned method, metal oxides, for example, Ta₂O₅, Ta₂Oₙ (n is a positive number of less than 5), Nb₂O₅, Nb₂Oₘ (m is a positive number of less than 5), and a mixture thereof are formed. When a metal alloy is used, an oxide containing the respective elements of the alloy is obtained.

The tantalate compound and/or the niobate compound constituting a dielectric material layer formed on the surface of the electrode material for a capacitor obtained by the process of the present invention are compounds of tantalate and/or niobate with an alkali metal element, an alkaline earth metal element or a Group 3A element such as lanthanide series element, or, when an alloy of tantalum and/or niobium is used, they are compounds of acids of alloy metals of tantalum metal and/or niobium, plus at least one element selected from Group 3A elements, Group 4A elements, Group 3B elements, Group 4B elements and Group 5B elements in the Periodic Table, with an alkali metal element, an alkaline earth metal element or a Group 3A element such as lanthanide series element. The tantalum and niobium in the tantalate and/or niobate may have a valence of 4 or 5, or those having respective valences may be present in combination.

Examples of the tantalate compound and niobate compound include a perovskite compound. The perovskite compound has a high dielectric constant and exhibits excellent stability and other properties desired for a dielectric material, therefore, when a capacitor is manufactured using this material, the capacitor obtained can have a large capacitance per unit weight, good dielectric strength and in turn good leakage current characteristics. Also, the dielectric constant of the dielectric material can be elevated by sintering a molding of these compounds to enhance crystallinity. In the case when the dielectric material used is in the amorphous state or in the lowly crystalline state, the capacitor manufactured using it exhibits good leakage current characteristics.

A dielectric layer containing a tantalate compound and/or a niobate compound cannot be formed by the conventional direct reaction method, but can be formed by the method disclosed in the present invention.

In the present invention, the electric material is made by reacting tantalum metal and/or niobium metal or an alloy thereof, which have an oxide layer formed on the surface, with an alkaline solution containing an alkali metal compound and/or an alkaline earth metal compound. By controlling the reaction conditions, the oxide of tantalum metal and/or niobium metal or an alloy thereof can be freely allowed either to be wholly converted to an acid compound, or to partially remain on the surface of the tantalum metal and/or niobium metal or an alloy thereof, so that a dielectric layer having a sufficiently thin two-layer structure consisting of an oxide layer of tantalum metal and/or niobium metal or an alloy thereof, and an acid compound layer of a tantalate compound and/or niobate compound can be manufactured.

The film thickness of dielectric layer is the thickness of the metalate compound when the dielectric layer has a single layer structure, and the total thickness of the metal oxide layer and the metalate compound layer, when the dielectric layer has a two-layer structure. With a dielectric layer having a large thickness, a capacitor having high dielectric strength can be obtained, and with a dielectric layer having a small thickness, a capacitor having high capacitance can be obtained. Therefore, the film thickness is preferably controlled by a preliminary test according to the purpose of a capacitor manufactured.

For example, in the case where the dielectric layer with a single layer structure is formed at 20 [V], the acid compound dielectric material as a whole may be formed to have a film thickness of 500 to 1,000 Å which is sufficiently small for obtaining a larger capacitance.

Also, in the case of the dielectric layer having a two-layer structure, these two layers are disposed in series, therefore, when the oxide layer is extremely thin, the capacitor manufactured can have a large capacitance due to the small thickness of the oxide layer though the dielectric constant as a whole is determined by the dielectric constant of the oxide layer. In other cases, the acid compound is responsible for the entire dielectric constant and the capacitor manufactured can have a large capacitance.

For example, in the case where the dielectric layer with a two-layer structure is formed at 20 [V], the thickness of the dielectric material as a whole is from 500 to 1,000 Å and in the two-layer structure, the oxide film can be formed to have a thickness of 5 to 100 Å which is sufficiently small for obtaining larger capacitance.

The composition and thickness of each dielectric layer vary depending on the reaction temperature, reaction time and pH of the reaction solution at the formation of the dielectric layer, or the applied voltage and applied current density at the electrolysis, therefore, the conditions should be preferably determined by a preliminary test and appropriately selected according to the purpose.

The method for preparing an alkaline solution containing an alkali metal compound and/or an alkaline earth metal compound and the method for forming a dielectric layer, which are employed in the manufacture of the electrode material for capacitors of the present invention, are further described below. The alkaline solution may also be similarly prepared which is used for the reaction with tantalum metal and/or niobium metal, an alloy thereof or a sintered body thereof.

By the term "the alkaline solution containing an alkali metal compound and/or an alkaline earth metal compound" as used herein is meant an alkaline solution in which a part or the whole of a compound containing at least one alkali metal element and/or alkaline earth metal element is dissolved. The pH of this solution is preferably in the range from 10 to 14 and more preferably from the standpoint of increasing the reactivity, from 12 to 14. If the pH is excessively low, the reactivity into a tantalate compound and/or niobate compound or the stability of the reaction product disadvantageously decreases. In the case where the pH is low after only the above-described compound is dissolved or where the solubility of the compound is low, the pH of the solution before use may be adjusted by using a strong alkali compound in combination. The solvent for the alkaline solution is usually water but a polar solvent such as alcohol may also be used.

Examples of the compound containing an alkali metal element include a hydroxide, an oxide, an alcholate and a weak acid salt of the elements belonging to Group 1A in the Periodic Table (Li, Na, K, Rb, Cs and Fr).

The alkaline earth metal element as used herein is defined as the element belonging to Group 2A (Be, Mg, Ca, Sr, Ba and Ra) or Group 2B (Zn, Cd and Hg) of the Periodic Table. As examples of the compound containing an alkaline earth metal element, there can be mentioned a hydroxide, an oxide, an alcoholate and a weak acid salt of these elements. In the case of using a weak acid salt as the compound containing an alkaline earth metal element, a modified alkali such as sodium hydroxide or potassium hydroxide may be used in combination. In the case of using a compound containing an alkaline earth metal element having a low solubility, a saturated solution of the compound may be used or a suspension of the powdered oxide or hydroxide of the compound may be used. In the case of using a suspension of the powder, a design of preventing the contact of the powder with the metal or an alloy thereof must be made so as not to allow the powder to clog pores within the dielectric layer as being formed on the surface of tantalum metal and/or niobium metal or an alloy thereof and thereby inhibit the reaction in the inside of pores. For example, the metal or an alloy thereof is dipped in a supernatant portion of the solution and only the supernatant portion is gently stirred while taking care not to blow up the precipitated powder. Also, a filter may be interposed between the supernatant portion and the precipitated powder so as to prevent the invasion of the precipitated powder.

In the case of forming the dielectric layer in an alkaline solution containing an alkali metal compound and/or an alkaline earth metal compound, the reaction is preferably performed in a gas atmosphere such as oxygen gas, nitrogen gas or argon gas, so that the reaction with carbon dioxide in air to cause the lowering of the pH of the solution, production of precipitates, and mixing of a carbonate compound into the dielectric layer can be prevented.

The reaction for forming the dielectric layer may be performed at a reaction temperature of 30°C to 250°C, however, if the reaction temperature exceeds the boiling point of the solvent, the reaction is preferably performed in an applied pressure system. For example, when the reaction is performed using water as the reaction solvent under an atmospheric pressure, the dielectric layer is preferably formed at a temperature of 30°C to 98°C, more preferably 60°C to 95°C from the standpoint of increasing the solubility and preventing the evaporation of water.

As examples of the method for forming a dielectric layer by the electrolytic oxidation in an alkaline solution containing an alkali metal compound and/or alkaline earth metal compound, there can be mentioned methods of passing an electric current between tantalum metal and/or niobium metal or an alloy thereof acting the part of anode and an appropriate cathode which is corrosion-resistant against the electrolytic solution and has a high dielectric constant, through an electrolytic solution by a constant voltage method, a constant current method, a pulse method or a combination of these methods.

In the method for forming the dielectric layer by the electrolytic oxidation in an alkaline solution containing an alkali metal compound and/or an alkaline earth metal compound, the alkali metal compound and/or the alkaline earth metal compound is consumed only in an amount necessary for the electrolytic oxidation, therefore, the reaction of the entire raw material solution for the reaction does not proceed. Thus, the raw material solution needs not be exchanged for each operation, the dielectric layer can be continuously formed, and the batchwise treatment is not necessary.

A capacitor can be manufactured using the thus-obtained electrode material for a capacitor as one part electrode having formed thereon a dielectric layer, by combining it with the other part electrode.

In the process of the present invention, the other part electrode of the capacitor is not particularly limited, and includes, for example, at least one compound selected from electrolytic solutions, organic semiconductors and inorganic semiconductors, which are all well-known in the aluminum electrolytic capacitor industries. As specific examples of the electrolytic solution, there can be mentioned a solution containing 5% by weight of isobutyltripropylammonium borotetrafluoride electrolyte in a dimethylformamide/ethylene glycol mixed liquid, and a solution containing 7% by weight of tetraethylammonium borotetrafluoride electrolyte in a propylene carbonate/ethylene glycol mixed liquid.

As specific examples of the organic semiconductor, there can be mentioned an organic semiconductor comprising a benzopyrroline tetramer and chloranil, an organic semiconductor mainly comprising tetrathiotetracene, an organic semiconductor mainly comprising tetracyanoquinodimethane, and an organic semiconductor mainly comprising an electrically conducting polymer obtained by doping a polymer represented by the following formula (1) or (2) with a dopant. As specific examples of the inorganic semiconductor, there can be mentioned an inorganic semiconductor mainly comprising lead dioxide or manganese dioxide, and an inorganic semiconductor comprising tri-iron tetroxide. These semiconductors may be used either alone or as a combination of two or more thereof. 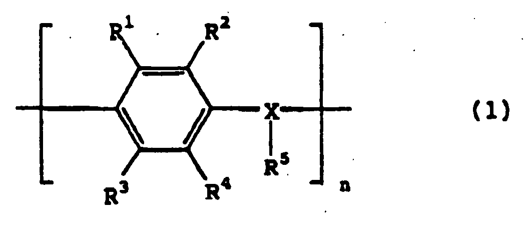 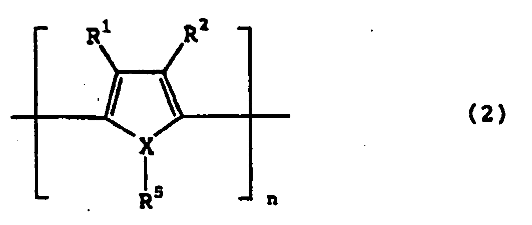 wherein R¹, R², R³ and R⁴, which may be the same or different, each represents hydrogen, an alkyl group having from 1 to 6 carbon atoms or an alkoxy group having from 1 to 6 carbon atoms, X represents an oxygen, sulfur or nitrogen atom, and R⁵, which is present only when X is nitrogen atom, represents hydrogen or an alkyl group having from 1 to 6 carbon atoms. R¹ and R², and R³ and R⁴ in respective pairs may combine with each other to form a ring. The polymers represented by formulae (1) and (2) include, for example, polyaniline, polyoxyphenylene, polyphenylene sulfide, polythiophene, polyfuran, polypyrrole, polymethylpyrrole and derivatives of these polymers.

When an organic or inorganic semiconductor having an electrical conductivity of 10⁻² to 10³ [S·cm⁻¹] is used, the capacitor manufactured can be more reduced in the impedance value and more increased in the capacitance at a high frequency.

Furthermore, when the other part electrode is a solid, a carbon paste and a silver paste are formed in this order on the other part electrode and this laminate is encapsulated with a material such as an epoxy resin to form a capacitor. The capacitor may have a niobium or tantalum lead integrally molded with the electrode material for a capacitor, or welded before and after the molding. In the case where the other part electrode is a liquid, the capacitor constructed by those two electrodes is housed, for example, in a can electrically connected to the other part electrode to form a capacitor. In this case, the capacitor is designed so that the electrode side of the electrode material for a capacitor is brought out to the outside through the niobium or tantalum lead and insulated by an insulating rubber from the can.

The present invention will now be more specifically described by the following working examples. In these examples, percents (%) are by weight.

The electrode material for a capacitor manufactured in the working examples was evaluated by the value of capacitance as measured at 120 Hz under the conditions such that the material was dipped in a 30% sulfuric acid at room temperature. The leakage current value of the capacitor was a value as measured after continuously applying a voltage of 4[V] for 1 minute at room temperature. The capacitance was a value as measured at room temperature and 120 Hz. The kind of the elements present in the dielectric layer was identified by the Auger analysis.

### Example 1

A tantalum foil (thickness: 0.12 mm, size: 10 mm x 10 mm) was thoroughly washed with hydrofluoronitric acid (a mixture of hydrofluoric acid and nitric acid) and repeatedly washed with ion exchanged water. This foil as an anode was dipped in an aqueous 0.1% phosphoric acid solution, and using platinum as a cathode, an electrolytic formation was performed by applying a voltage of 10[V] for 30 minutes at 80°C. After the completion of electrolytic formation, the formed product was thoroughly washed with ion exchanged water from which carbon dioxide was removed by boiling. Separately, in a Teflon-made container, high-purity strontium hydroxide crystal and high-purity barium hydroxide crystal were each dissolved in 100 ml of ion exchanged water from which carbon dioxide was completely removed, adjusted to have a concentration of 400 mmol/liter and 25.5 mol/liter, respectively, and then kept at 90°C under argon bubbling. The electrolytically formed tantalum foil obtained above was dipped in these solutions under argon bubbling, reacted for 4 hours and then washed with ion exchanged water from which carbon dioxide was removed, thereby obtaining an electrode material for a capacitor. The metal elements present in the tantalate compound formed on the surface of the manufactured electrode material were identified as strontium, barium and tantalum. The capacitance value of this electrode material is shown in Table 2.

### Example 2

An electrode material for capacitors was obtained in the same manner as in Example 1 except that a niobium plate (thickness: 0.2 mm, size: 10 mm x 10 mm) was used in place of the tantalum foil. 2 mol/liter of sodium hydroxide was used in place of strontium hydroxide, the barium hydroxide concentration was changed to 0.1 mol/liter and the reaction was performed at a solution temperature of 85°C for 1 hour, with all other conditions remaining the same. The metal elements present in the niobate compound formed on the surface of the niobium plate were identified as barium, sodium and niobium. Also, the layer comprising niobium oxide and the niobic acid compound layer formed on the niobium plate of the electrode material were confirmed to have a thickness of about 80 Å and about 350 Å, respectively, by SIMS (secondary ion mass spectrometric analysis) analysis profile in the thickness direction. The capacitance value of this electrode material is shown in Table 2.

### Example 3

An alloy comprising 86% of niobium and 14% of zirconium was hydrogenated and then pulverized to obtain a powdered alloy (average particle diameter: 5.2 µm). Subsequently, 0.03 g of this powder was molded together with 0.2 mmφ niobium rod into a size of 2 mm × 3 mm × 1.2 mm and then sintered under a pressure of 10⁻⁵ Torr and 1,000°C for 20 minutes to obtain a sintered body.

Separately, ion exchanged water filled in a Teflon-made container was boiled to remove carbon dioxide and then kept at 85°C. In this ion exchange water filled in the container, a high-purity barium oxide obtained by igniting barium carbonate was dissolved to prepare 0.4 mol/liter of a solution. Subsequently, this solution was allowed to stand in an argon atmosphere, and using the sintered body obtained above as an anode and platinum as a cathode, an electrolytic oxidation was performed by applying a voltage of 20 [V] for 100 minutes. Thereafter, the formed product was thoroughly washed with ion exchanged water from which carbon dioxide was removed, to obtain an electrode material for a capacitor. The metal elements present in the niobate compound formed on the surface of the sintered body of the electrode material were identified as barium, zirconium and niobium. The capacitance value of this electrode material is shown in Table 2.

### Examples 4 to 6

Electrode materials for a capacitor were obtained in the same manner as in Example 3 except that the kind and composition of the alloy, the kind and concentration of the compound for forming an alkaline solution, and the electrolysis conditions were changed as shown in Table 1. In Example 4, the metal elements present in the niobate compound formed on the surface of the sintered body of the electrode material were identified as strontium, bismuth and niobium. In Example 5, the metal elements present in the niobate compound formed on the surface of the sintered body of the electrode material were identified as sodium, barium, yttrium and niobium. In Example 6, the metal elements present in the niobate compound formed on the surface of the sintered body of the electrode material were identified as barium, tin and niobium. The capacitance values of these electrode materials are shown in Table 2.

**Table 1**

| | Alloy composition ratio, molar ratio | Aqueous alkaline solution | Concentration [mol/l] | Conditions for electrolysis | | |
|---|---|---|---|---|---|---|
| | | | | Solution temperature | Voltage [V] | Time [hr] |
| Example 4 | Niobium : bismuth = 1:1 | Strontium hydroxide | 0.2 | 80 | 20 | 10 |
| Example 5 | Niobium: yttrium = 10:0.7 | Sodium hydroxide | 1 | 70 | 30 | 5 |
| | | Barium hydroxide | 0.75 | | | |
| Example 6 | Niobium:tin = 2:1 | Barium hydroxide | 0.2 | 90 | 15 | 0.4 |

### Comparative Example 1

An electrode material for a capacitor was manufactured in the same manner as in Example 2 except that the niobate compound was not formed on the surface, that is, the reaction treatment in the sodium hydroxide and barium hydroxide solutions was not performed in Example 2. The capacitance value of this electrode material is shown in Table 2.

### Comparative Example 2

An electrode material for capacitors was obtained in the same manner as in Example 3 except that the electrolytic oxidation treatment was performed in an aqueous 0.1% phosphoric acid solution in place of the electrolysis in an alkaline solution in Example 3. The capacitance value of this electrode material is shown in Table 2.

**Table 2**

| | Capacitance [µF] |
|---|---|
| Example 1 | 10 |
| Example 2 | 21 |
| Example 3 | 190 |
| Example 4 | 120 |
| Example 5 | 90 |
| Example 6 | 150 |
| Comparative Example 1 | 4.4 |
| Comparative Example 2 | 30 |

### Examples 7 to 10

40 units of electrode materials for a capacitor were manufactured in the same manner as in Example 3. At this time, the metalate compound was continuously formed for the 40 electrode materials without exchanging the barium oxide solution prepared. Thereafter, the other part electrode was formed by the method shown in Table 3. Furthermore, a carbon layer and a silver paste layer were laminated thereon in this order. The thus-laminated product was placed on a lead frame and the entire body exclusive of a part of the lead was encapsulated with an epoxy resin to manufacture 10 chip capacitors. The evaluation results are shown in Table 4.

**Table 3**

| | Other part electrode | Formation method of electrode |
|---|---|---|
| Example 7 | Mixture of lead dioxide and lead sulfate | Oxidation reaction in lead acetate solution was repeated. |
| Example 8 | Manganese dioxide | Heat decomposition reaction of manganese sulfate was repeated. |
| Example 9 | Chloranil complex of tetrathiotetracene | Operation of dipping in a solution of the compound for other part electrode and then drying was repeated. |
| Example 10 | Dope of polypyrrole in aromatic sulfonic acid | Oxidation reaction in pyrrole solution was repeated. |

### Comparative Example 3

After 10 units of electrode materials for a capacitor were prepared in the same manner as in Comparative Example 2, chip capacitors were manufactured in the same manner as in Example 7. The evaluation results are shown in Table 4.

**Table 4**

| | Capacitance [µF] | Leakage current [µA] |
|---|---|---|
| Example 7 | 120 | 125. |
| Example 8 | 80 | 106 |
| Example 9 | 70 | 96 |
| Example 10 | 100 | 110 |
| Comparative Example 3 | 22 | 73 |

In the Table 4, the values are an average value of n=10 in respective Examples and Comparative Examples.

From comparison of Examples 1 and 2 with Comparative Example 1 and comparison of Example 3 with Comparative Example 2 in Table 2, it is seen that the electrode material for a capacitor of the present invention is a material capable of ensuring a large capacitance. Furthermore, from comparison of Examples 7 to 10 with Comparative Example 3 in Table 4, it is seen that when a capacitor is manufactured using the electrode material for a capacitor of the present invention, the capacitance is increased by 3 to 6 times, though the leakage current value worsens to some extent.

### INDUSTRIAL APPLICABILITY

When the electrode material for a capacitor obtained by the process of the present invention is used for a capacitor, the capacitor produced can have a large capacitance per unit weight without worsening the leakage current value of the capacitor. Furthermore, when an electrode material in which a dielectric layer is formed by the electrolytic oxidation in an alkaline solution is used, the dielectric material can be continuously formed without exchanging the raw material solution for each operation, therefore, a batchwise processing is not necessary and good productivity can be attained.

## Claims

1. A process for making an electrode material for a capacitor, which material comprises at least one metal selected from tantalum metal, niobium metal, tantalum-niobium composite metal or a tantalum and/or niobium alloy with a ratio of tantalum or niobium in the range of 15 mol% to 98 mol%, which has a dielectric layer formed on the surface thereof; wherein said process comprises reacting an oxide layer of said metal formed on the surface of said metal with an alkaline solution containing an element selected from alkaline earth metals to convert at least a part of the metal oxide layer of said metal into at least one metalate compound selected from a tantalate compound, a niobate compound and a composite material of tantalate compound with niobate compound.

2. Then process for making an electrode material for a capacitor as claimed in claim 1, wherein the alkaline solution additionally contains an element selected from alkali metals.

3. The process for making an electrode material for a capacitor as claimed in claim 1, wherein the dielectric layer is comprised of at least one metal selected from tantalum metal, niobium metal and tantalum-niobium composite metal, and at least one metalate compound selected from a tantalate compound, a niobate compound and a tantalate compound-niobate compound composite.

4. The process for making an electrode material for a capacitor as claimed in claim 1, wherein the tantalum metal, the niobium metal and the tantalum-niobium composite metal are a simple metal, or an alloy consisting of tantalum and niobium, or an alloy consisting of at least one metal selected from tantalum and niobium, and at least one clement selected from the group consisting of Group 3A elements, Group 4A elements, Group 3B elements, Group 4B elements and Group 58 elements in the Periodic Table.

5. The process for making an electrode material for a capacitor as claimed in claim 4, wherein the simple metal and the alloy are a sintered body.

6. A process for making a capacitor comprising making the electrode material as claimed in claim 1 and forming the other part electrode on the dielectric layer of said electrode material.

## Patentansprüche

1. Verfahren zur Herstellung eines Elektrodenmaterials für einen Kondensator, welches mindestens ein Metall, das unter Tantalmetall, Niobmetall, Tantal-Niob-Verbundmetall oder einer Tantal-und/oder Nioblegierung mit einem Anteil von Tantal oder Niob im Bereich von 15 mol-% bis 98 mol-% ausgewählt ist, wobei das Material eine auf seiner Oberfläche gebildete dielektrische Schicht aufweist; wobei das Verfahren das Umsetzen einer auf der Oberfläche des Metalls gebildeten Oxidschicht des Metalls mit einer ein unter Erdalkalimetallen ausgewähltes Element enthaltenden alkalischen Lösung umfasst, wobei mindestens ein Teil der Metalloxidschicht des Metalls in mindestens eine Metallatverbindung umgewandelt wird, die unter einer Tantalatverbindung, einer Niobatverbindung und einem Verbundmaterial aus einer Tantalatverbindung mit einer Niobatverbindung ausgewählt ist.

2. Verfahren zur Herstellung eines Elektrodenmaterials für einen Kondensator nach Anspruch 1, wobei die alkalische Lösung zusätzlich ein unter Alkalimetallen ausgewähltes Element enthält.

3. Verfahren zur Herstellung eines Elektrodenmaterials für einen Kondensator nach Anspruch 1, wobei die dielektrische Schicht mindestens ein Metall, das unter einem Tantalmetall, Niobmetall und Tantal-Niob-Verbundmetall ausgewählt ist, und mindestens eine Metallatverbindung umfaßt, die unter einer Tantalatverbindung, Niobatverbindung und einem Tantalatverbindungs-Niobatverbindungs-Verbund ausgewählt ist.

4. Verfahren zur Herstellung eines Elektrodenmaterials für einen Kondensator nach Anspruch 1, wobei das Tantalmetall, das Niobmetall und das Tantal-Niob-Verbundmetall einfache Metalle oder eine Legierung, die aus Tantal und Niob besteht, oder eine Legierung sind, die aus mindestens einem Metall, ausgewählt unter Tantal und Niob, und mindestens einem Element besteht, das aus der Gruppe ausgewählt ist, die aus Elementen der Gruppe 3A, Elementen der Gruppe 4A, Elemente der Gruppe 3B, Elementen der Gruppe 4B und Elementen der Gruppe 5B des Periodensystems besteht.

5. Verfahren zur Herstellung eines Elektrodenmaterials für einen Kondensator nach Anspruch 4, wobei das einfache Metall und die Legierung ein Sinterkörper sind.

6. Verfahren zur Herstellung eines Kondensators, welches die Herstellung eines Elektrodenmaterials nach Anspruch 1 und das Bilden der anderen Teilelektrode auf der dielektrischen Schicht des Elektrodenmaterials umfasst.

## Revendications

1. Processus de réalisation d'un matériau d'électrode pour un condensateur, ledit matériau comprenant au moins un métal choisi entre le métal tantale, le métal niobium, le métal composite tantale-niobium, ou un alliage tantale et/ou niobium avec un rapport de tantale ou niobium, dans la gamme de 15% en moles à 98% en moles, qui a une couche diélectrique formée sur sa surface ; dans lequel ledit processus comprend la réaction d'une couche d'oxyde dudit métal formée sur la surface dudit métal avec une solution alcaline contenant un élément choisi parmi des métaux alcalino-terreux pour convertir au moins une partie de la couche d'oxyde métallique dudit métal en au moins un composé de métalate choisi parmi un composé de tantalate, un composé de niobate et un matériau composite de composé de tantalate avec un composé de niobate.

2. Processus de réalisation d'un matériau d'électrode pour un condensateur selon la revendication 1, dans lequel la solution alcaline contient en plus un élément choisi parmi des métaux alcalins.

3. Processus de réalisation d'un matériau d'électrode pour un condensateur selon la revendication 1, dans lequel la couche diélectrique comprend au moins un métal choisi parmi le métal tantale, le métal niobium et le métal composite tantale-niobium, et au moins un composé de métalate choisi parmi un composé de tantalate, un composé de niobate et un matériau composite de composé tantalate-composé niobate.

4. Processus de réalisation d'un matériau d'électrode pour un condensateur selon la revendication 1, dans lequel le métal tantale, le métal niobium et le métal composite tantale-niobium sont un métal simple, ou un alliage constitué de tantale et de niobium, ou un alliage constitué d'au moins un métal choisi parmi le tantale et le niobium, et au moins un élément choisi dans le groupe constitué d'éléments du Groupe 3A, d'éléments du Groupe 4A, d'éléments du Groupe 3B, d'éléments du Groupe 4B et d'éléments du Groupe 5B dans le tableau périodique.

5. Processus de réalisation d'un matériau d'électrode pour un condensateur selon la revendication 4, dans lequel le métal simple et l'alliage sont un corps fritté.

6. Processus de réalisation d'un condensateur comprenant la réalisation du matériau d'électrode selon la revendication 1 et formant l'autre partie d'électrode sur la couche diélectrique dudit matériau d'électrode.
